(19) Europäisches Patentamt

European Patent Office

Office européen des brevets

(11) **EP 4 518 533 A1**

(12) **EUROPEAN PATENT APPLICATION**
published in accordance with Art. 153(4) EPC

(43) Date of publication:
05.03.2025 Bulletin 2025/10

(21) Application number: 23796808.6

(22) Date of filing: 27.04.2023

(51) International Patent Classification (IPC):
H04W 72/25 (2023.01)     H04W 72/21 (2023.01)
H04W 72/232 (2023.01)     H04W 72/04 (2023.01)
H04L 1/18 (2023.01)     H04W 92/18 (2009.01)

(52) Cooperative Patent Classification (CPC):
H04L 1/18; H04W 72/04; H04W 72/21;
H04W 72/232; H04W 72/25; H04W 92/18

(86) International application number:
PCT/KR2023/005728

(87) International publication number:
WO 2023/211165 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2022  US 202263335676 P

(71) Applicant: **LG Electronics Inc.**
**Yeongdeungpo-gu**
**Seoul 07336 (KR)**

(72) Inventors:
• **LEE, Youngdae**
**Seoul 06772 (KR)**
• **LEE, Seungmin**
**Seoul 06772 (KR)**
• **YANG, Suckchel**
**Seoul 06772 (KR)**
• **SEO, Hanbyul**
**Seoul 06772 (KR)**
• **KIM, Seonwook**
**Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR PERFORMING SIDELINK COMMUNICATION IN WIRELESS COMMUNICATION SYSTEM**

(57)     A method and apparatus for performing sidelink communication in a wireless communication system are disclosed. The method performed by a terminal in a wireless communication system, according to an embodiment of the present disclosure, comprises the steps of: performing, on the basis of a sidelink (SL) resource pool, a first SL transmission on a resource selected by the terminal; transmitting, to a base station, uplink control information (UCI) related to the first SL transmission; receiving, from the base station, downlink control information (DCI) including information related to SL resource allocation; and performing a second SL transmission on the basis of the SL resource allocation, wherein the information related to the SL resource allocation may indicate a resource within a channel occupancy time (COT) duration of the base station.

FIG.9

Frist SL transmission based on
second SL resource allocation mode — S910

Transmit UCI related to
first SL transmission to base station — S920

Receive DCI including information related to
SL resource allocation from base station — S930

Second SL transmission based on
SL resource allocation — S940

EP 4 518 533 A1

**Description**

[Technical Field]

The present disclosure relates to a wireless communication system, and more particularly, to a method and a device for performing sidelink communication in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device for performing sidelink communication in an unlicensed band in a wireless communication system.

An additional technical problem of the present disclosure is to provide a method and a device for transmitting a sidelink based on a channel occupancy time of a base station in a wireless communication system.

The technical objects to be achieved by the present disclosure are not limited to the above-described technical objects, and other technical objects which are not described herein will be clearly understood by those skilled in the pertinent art from the following description.

[Technical Solution]

A method performed by a terminal in a wireless communication system according to an aspect of the present disclosure includes performing first sidelink (SL) transmission on a resource selected by the terminal based on a SL resource pool; transmitting, to a base station, uplink control information (UCI) related to the first SL transmission; receiving, from the base station, downlink control information (DCI) including information related to SL resource allocation; and performing second SL transmission based on the SL resource allocation, wherein the information related to the SL resource allocation may indicate a resource within a channel occupancy time (COT) duration of the base station.

A method performed by a base station in a wireless communication system according to an additional aspect of the present disclosure includes receiving, from the terminal, uplink control information (UCI) related to first SL transmission transmitted by a terminal on a resource selected by the terminal based on a sidelink (SL) resource pool; and transmitting, to the terminal, downlink control information (DCI) including information related to SL resource allocation, wherein information related to the SL resource allocation for second SL transmission performed by the terminal may indicate a resource within a channel occupancy time (COT) duration of the base station.

[Technical Effects]

According to the present disclosure, a method and a device for performing sidelink communication in an unlicensed band in a wireless communication system may be provided.

According to the present disclosure, a method and a device for transmitting a sidelink based on a channel occupancy time of a base station in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 shows a procedure for performing V2X or SL communication according to a transmission mode in a wireless communication system to which the present disclosure may be applied.
FIG. 8 illustrates a cast type for V2X or SL communication in a wireless communication system to which the present disclosure may be applied.
FIG. 9 is a diagram for describing an exemplary method of a terminal performing sidelink transmission based on a channel occupancy time of a base station according to an embodiment of the present disclosure.
FIG. 10 is a diagram for describing an exemplary method of a base station supporting a terminal to perform sidelink transmission based on a channel occupancy time of a base station according to an embodiment of the present disclosure.
FIG. 11 is a diagram for describing a method performed by a SL transmitting terminal, a SL receiving terminal and a base station according to an embodiment of the present disclosure.
FIG. 12 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.
A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.
The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control

NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

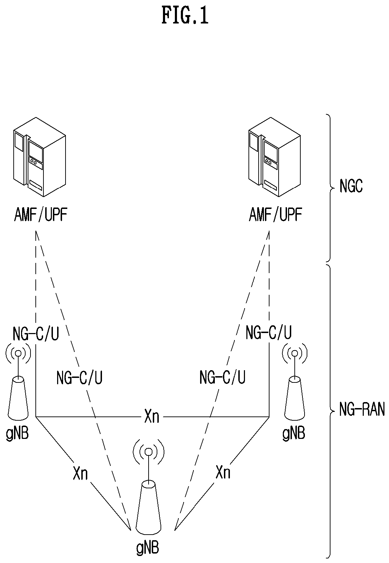

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

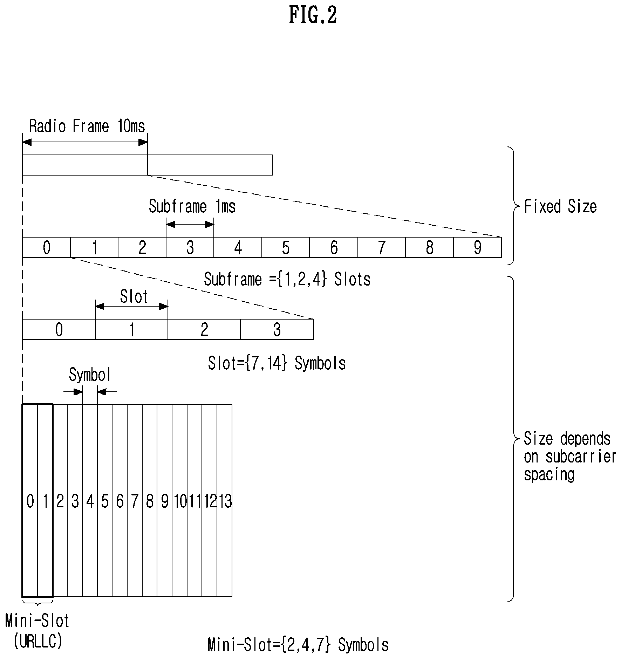

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=2^μ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expressed as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu\in\{0,....,N_{slot}^{subframe,\mu}-1\}$ in a subframe and are numbered in an increasing order of $n_{s,f}^\mu\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

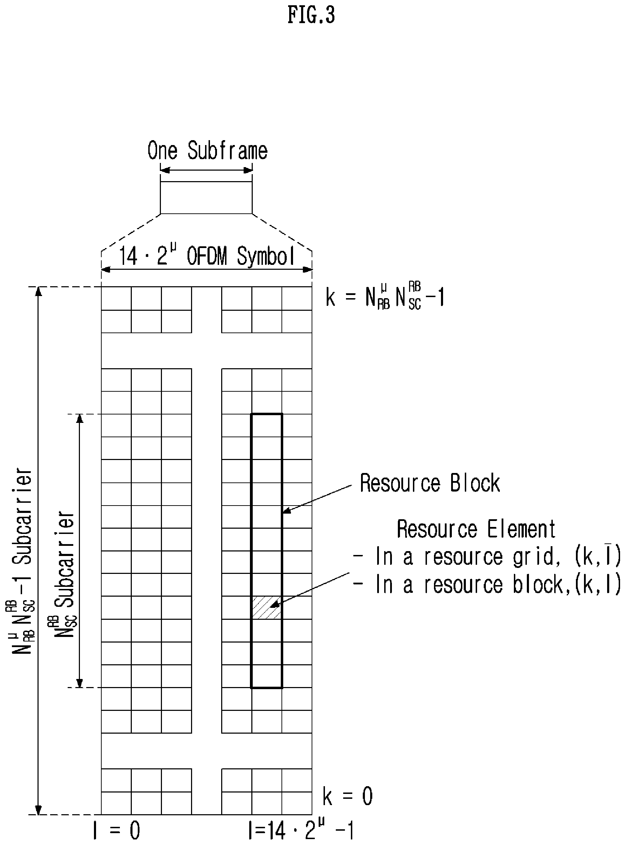

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

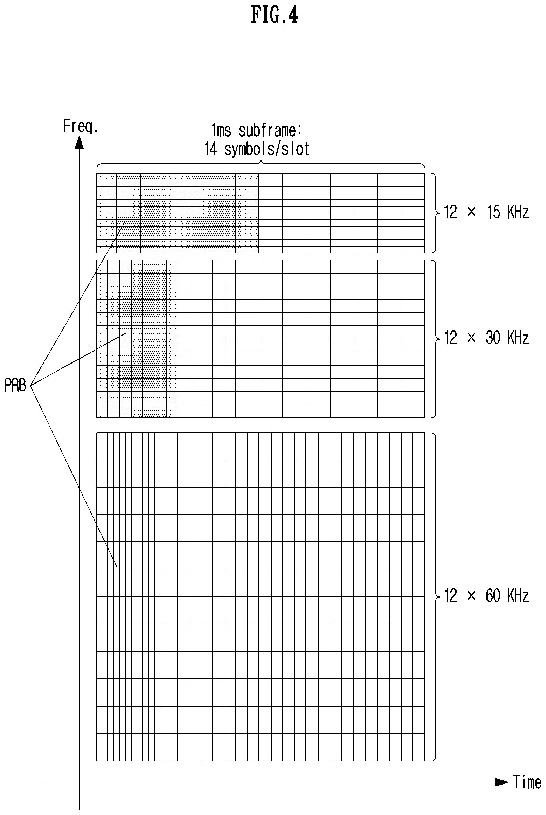

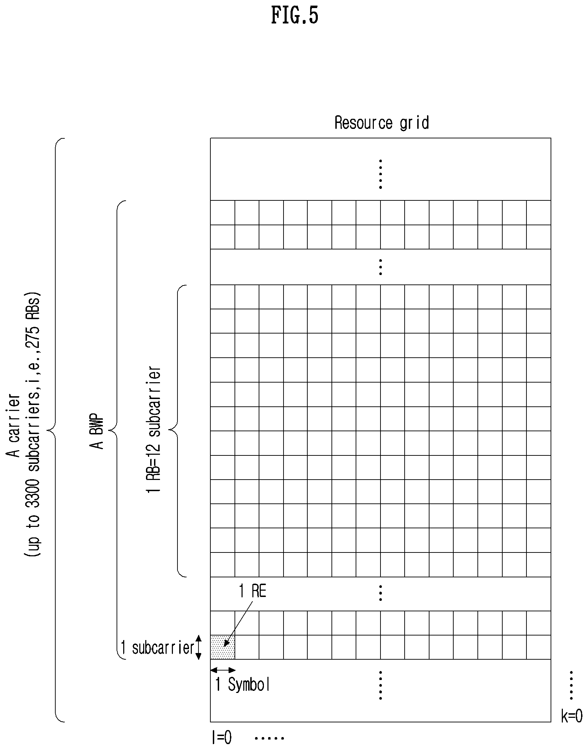

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

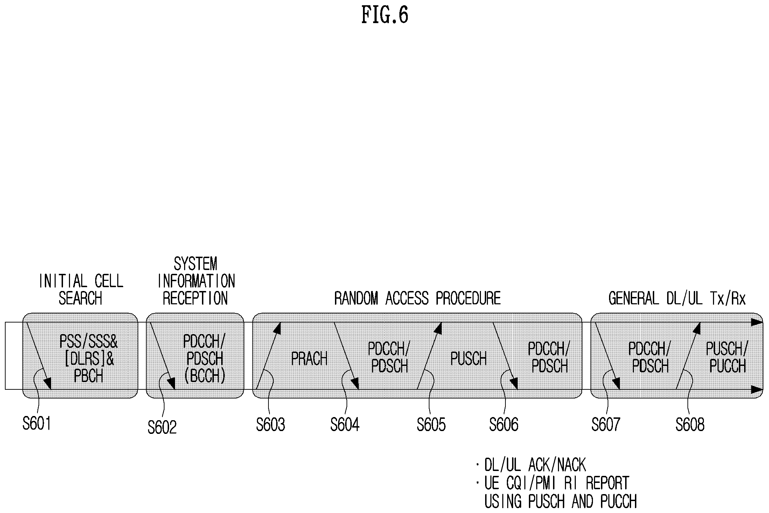

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation and Coding Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

V2X (vehicle-to-everything)/side link (SL: sidelink) communication

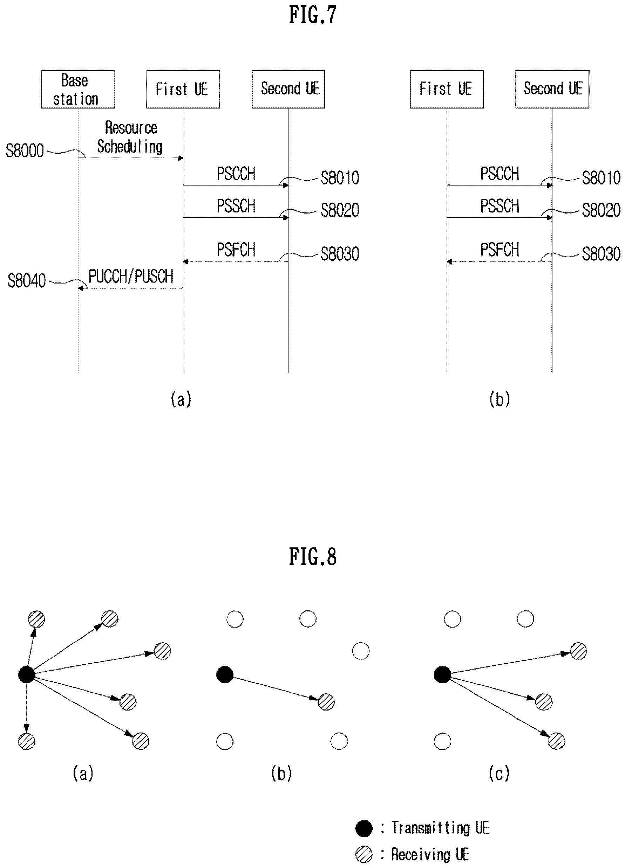

FIG. 7 illustrates a procedure for performing V2X or SL communication according to a transmission mode in a wireless communication system to which the present disclosure may be applied.

The embodiment of FIG. 7 may be combined with various embodiments of the present disclosure. In various embodiments of the present disclosure, the transmission mode may be referred to as a mode or a resource allocation mode. Hereinafter, for convenience of explanation, the transmission mode in LTE may be referred to as an LTE transmission mode, and the transmission mode in NR may be referred to as an NR resource allocation mode.

For example, FIG. 7(a) illustrates the operation of a UE related to LTE transmission mode 1 or LTE transmission mode 3. Alternatively, for example, FIG. 7(a) illustrates the operation of a UE related to NR resource allocation mode 1. For example, LTE transmission mode 1 may be applied to general SL communication, and LTE transmission mode 3 may be applied to V2X communication.

For example, Fig. 7(b) illustrates the operation of a UE associated with LTE transmission mode 2 or LTE transmission mode 4. Alternatively, for example, Fig. 7(b) illustrates the operation of a UE associated with NR resource allocation mode 2.

Referring to FIG. 7(a), in LTE transmission mode 1, LTE transmission mode 3, or NR resource allocation mode 1, the base station may schedule SL resources to be used by the UE for SL transmission (S8000). For example, the base station may transmit information related to SL resources and/or information related to UL resources to the first UE. For example, the UL resources may include PUCCH resources and/or PUSCH resources. For example, the UL resources may be resources for reporting SL HARQ feedback to the base station.

For example, the first UE may receive information related to a dynamic grant (DG) resource and/or information related to a configured grant (CG) resource from the base station. For example, the CG resource may include a CG type 1 resource or a CG type 2 resource. In the present disclosure, the DG resource may be a resource that the base station configures/allocates to the first UE via DCI. In the present disclosure, the CG resource may be a (periodic) resource that the base station configures/allocates to the first UE via DCI and/or an RRC message. For example, in the case of a CG type 1 resource, the base station may transmit an RRC message including information related to the CG resource to the first UE. For example, in the case of a CG type 2 resource, the base station may transmit an RRC message including information related to the CG resource to the first UE, and the base station may transmit DCI related to activation or release of the CG resource to the first UE.

The first UE may transmit PSCCH(physical sidelink control channel) (e.g., Sidelink Control Information (SCI) or 1st-stage SCI) to the second UE based on the resource scheduling (S8010).

The first UE may transmit a PSSCH(physical sidelink shared channel) (e.g., a 2nd-stage SCI, a MAC protocol data unit (PDU), data, etc.) related to the PSCCH to the second UE (S8020).

The first UE may receive a PSFCH(physical sidelink feedback channel) related to the PSCCH/PSSCH from the second UE (S8030). For example, HARQ feedback information (e.g., NACK information or ACK information) can be received from the second UE via the PSFCH.

The first UE may transmit/report HARQ feedback information to the base station via PUCCH or PUSCH (S8040). For example, the HARQ feedback information reported to the base station may be information generated by the first UE based on HARQ feedback information received from the second UE. For example, the HARQ feedback information reported to the base station may be information generated by the first UE based on a rule set in advance. For example, the DCI may be DCI for scheduling of SL. For example, the format of the DCI may be DCI format 3_0 or DCI format 3_1.

Referring to FIG. 7(b), in LTE transmission mode 2, LTE transmission mode 4 or NR resource allocation mode 2, the UE may determine SL transmission resources within SL resources set by the base station/network or preset SL resources. For example, the set SL resources or preconfigured SL resources may be a resource pool. For example, the UE may autonomously select or schedule resources for SL transmission. For example, the UE may perform SL communication by selecting resources by itself within the configured resource pool. For example, the UE may perform sensing and resource (re)selection procedures to select resources by itself within a selection window. For example, the sensing may be performed on a sub-channel basis.

A first UE that has selected a resource within a resource pool may transmit a PSCCH (e.g., SCI or 1st-stage SCI) to a second UE using the resource (S8010).

The first UE may transmit a PSSCH (e.g., 2nd-stage SCI, MAC PDU, data, etc.) related to the PSCCH to the second UE (S8020).

The first UE may receive a PSFCH related to PSCCH/PSSCH from the second UE (S8030).

Referring to FIG. 7(a) or FIG. 7(b), for example, a first UE may transmit an SCI to a second UE on a PSCCH. Or, for example, the first UE may transmit two consecutive SCIs (e.g., 2-stage SCIs) to the second UE on the PSCCH and/or the PSSCH. In this case, the second UE may decode the two consecutive SCIs (e.g., 2-stage SCIs) to receive the PSSCH from the first UE. In the present disclosure, the SCI transmitted on the PSCCH may be referred to as a first (1st) SCI, a first SCI, a first-stage SCI, or a 1st-stage SCI format, and the SCI transmitted on the PSSCH may be referred to as a second (2nd) SCI, a second SCI, a second-stage SCI, or a 2nd-stage SCI format. For example, a 1st-stage SCI format may include SCI format 1-A, and a 2nd-stage SCI format may include SCI format 2-A and/or SCI format 2-B.

Referring to FIG. 7(a) or FIG. 7(b), in step S8030, the first UE may receive the PSFCH based on the description to be described below. For example, the first UE and the second UE may determine the PSFCH resource based on the description to be described below, and the second UE may transmit the HARQ feedback to the first UE using the PSFCH resource.

Describes the UE procedure for reporting HARQ-ACK on sidelink as specified in TS 38.213.

The UE may be indicated to transmit a PSFCH including HARQ-ACK information in response to the PSSCH reception by the SCI format scheduling the PSSCH reception. The UE provides HARQ-ACK information including ACK or NACK or only NACK.

The UE may be provided with a number of slots within the resource pool during a period of PSFCH transmission occasion resources by sl-PSFCH-Period. If the number of slots is 0, the PSFCH transmission of the UE within the resource pool is disabled.

The UE expects that slot $t'_k{}^{SL}$ ($0 \leq k < T'_{max}$) includes PSFCH transmission occasion resources if k mod $N_{PSSCH}{}^{PSFCH} = 0$, where $t'_k{}^{SL}$ is defined in TS 38.214, $T'_{max}$ is the number of slots belonging to the resource pool within 10240 msec according to TS 38.214, and $N_{PSSCH}{}^{PSFCH}$ is provided by sl-PSFCH-Period.

The UE may be indicated by higher layers not to transmit a PSFCH containing HARQ-ACK information in response to receiving a PSSCH.

When a UE receives a PSSCH from a resource pool and the HARQ feedback enabled/disabled indicator field of the associated SCI format 2-A/2-B/2-C has value 1, the UE provides HARQ-ACK information in a PSFCH transmission from the resource pool. The UE transmits the PSFCH in the first slot that includes PSFCH resources and that corresponds to at least a number of slots provided by sl-MinTimeGapPSFCH of the resource pool after the last slot of the PSSCH reception.

The UE may be provided with a set of $M_{PRB,set}{}^{PSFCH}$ PRBs in the resource pool for PSFCH transmission including HARQ-ACK information in the physical resource block (PRB) of the resource pool by sl-PSFCH-RB-Set. The UE may be provided with a set of $M_{PRB,set}{}^{PSFCH}$ PRBs in the resource pool by sl-RB-SetPSFCH for PSFCH transmission including conflict information in the PRB of the resource pool. The UE expects that different PRBs are (pre-)set for conflict information and HARQ-ACK information. For the number of $N_{SUBCH}$ sub-channels for the resource pool provided by sl-NumSubchannel and the number of PSSCH slots associated with PSFCH slots less than or equal to $N_{PSSCH}{}^{PSFCH}$, the UE allocates $[(i+j\ N_{PSSCH}{}^{PSFCH})\ M_{subch,slot}{}^{PSFCH}(i+1+j\ N_{PSSCH}{}^{PSFCH})\ M_{subch,slot}{}^{PSFCH}-1]$ PRBs from $M_{PRB,set}{}^{PSFCH}$ PRBs among the PSFCH slots and PSSCH slots associated with sub-channel j to slot i. Here, $M_{subch,slot}{}^{PSFCH}=M_{PRB,set}{}^{PSFCH}/(N_{subch}\ N_{PSSCH}{}^{PSFCH})$, $0 \leq i < N_{PSSCH}{}^{PSFCH}$, $0 \leq j < N_{subch}$, and the allocation starts in ascending order of i and continues in ascending order of j. The UE expects $M_{PRB,set}{}^{PSFCH}$ to be a multiple of $N_{subch} \cdot N_{PSSCH}{}^{PSFCH}$.

The UE determines the number of available PSFCH resources for multiplexing HARQ-ACK or conflict information in PSFCH transmission based on the indication by sl-PSFCH-CandidateResourceType as $R_{PRB,CS}{}^{PSFCH}=N_{type}{}^{PSFCH} \cdot M_{subch,slot}{}^{PSFCH} \cdot N_{CS}{}^{PSFCH}$, where $N_{CS}{}^{PSFCH}$ is the number of cyclic shift pairs for the resource pool provided by sl-NumMuxCS-Pair.

- When sl-PSFCH-CandidateResourceType is set to startSubCH, $N_{type}{}^{PSFCH}=1$, and $M_{subch,slot}{}^{PSFCH}$ PRBs are associated with the start sub-channel of the corresponding PSSCH.
- When sl-PSFCH-CandidateResourceType is set to allocSubCH, $N_{type}{}^{PSFCH}=N_{subch}{}^{PSSCH}$, and $N_{subch}{}^{PSSCH} \cdot M_{subch,slot}{}^{PSFCH}$ PRBs are associated with $N_{subch}{}^{PSSCH}$ sub-channels of the corresponding PSSCH.
- For conflict information, the corresponding PSSCH is determined based on sl-PSFCH-Occasion.

PSFCH resources are first indexed from $N_{type}{}^{PSFCH} \cdot M_{subch,slot}{}^{PSFCH}$ PRBs in ascending order of PRB index, and then from $N_{CS}{}^{PSFCH}$ cyclic shift pairs in ascending order of cyclic shift pair index.

The UE determines the index of the PSFCH resource for transmitting the PSFCH including HARQ-ACK information or conflict information in response to the PSSCH reception, which corresponds to the reserved resource, as $(P_{ID}+M_{ID})\ mod_{R_{PRB,CS}}{}^{PSFCH}$. Here, $P_{ID}$ is a physical layer source identifier provided by SCI format 2-A/2-B/2-C that schedules PSSCH reception or SCI format 2-A/2-B/2-C that reserves resources for conflict information to be provided from other UEs. For HARQ-ACK information, if the UE detects SCI format 2-A having a cast type indicator field value of "01", $M_{ID}$ is an identifier of the UE that receives the PSSCH indicated by the upper layer, otherwise $M_{ID}$ is 0. For conflict information, $M_{ID}$ is 0.

For PSFCH transmission including HARQ-ACK information or conflict information, the UE determines the value $m_0$ from the cyclic shift pair index corresponding to the PSFCH resource index and from $N_{CS}{}^{PSFCH}$ using Table 6 below to calculate the value $\alpha$ of the cyclic shift.

Table 6 illustrates a set of cyclic shift pairs.

[Table 6]

| $N_{CS}{}^{PSFCH}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |

(continued)

| $N_{CS}^{PSFCH}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 2 | 0 | 3 | - | - | - | - |
| 3 | 0 | 2 | 4 | - | - | - |
| 6 | 0 | 1 | 2 | 3 | 4 | 5 |

For PSFCH transmission including HARQ-ACK information, the UE determines a $m_{cs}$ value as shown in Table 7 below if the UE detects an SCI format 2-A or SCI format 2-C having a cast type indicator field value of "01" or "10" to calculate the value $\alpha$ of the cyclic shift, and determines an $m_{cs}$ value as shown in Table 8 below if the UE detects an SCI format 2-B or 2-A having a cast type indicator field value of "11". For PSFCH transmission including conflict information, the UE determines an $m_{cs}$ value as shown in Table 9 below to calculate the value $\alpha$ of the cyclic shift. The UE applies one cyclic shift from a cyclic shift pair to a sequence used for PSFCH transmission. Table 7 illustrates the mapping of cyclic shifts of a sequence for PSFCH transmission from a cyclic shift pair and HARQ-ACK information bit values when the HARQ-ACK information includes ACK or NACK.

[Table 7]

| HARQ-ACK value | 0 (NACK) | 1 (ACK) |
|---|---|---|
| Sequency cyclic shift | 0 | 6 |

Table 8 illustrates the mapping of cyclic shifts of a sequence for PSFCH transmission from a cyclic shift pair and HARQ-ACK information bit values when HARQ-ACK information contains only NACK.

[Table 8]

| HARQ-ACK value | 0 (NACK) | 1 (ACK) |
|---|---|---|
| Sequency cyclic shift | 0 | N/A |

Table 9 illustrates the mapping of the cyclic shift of a sequence for PSFCH transmission and the value of the conflict information bit from a cyclic shift pair.

[Table 9]

| Conflict information | Conflict information for the next time-reserved resource within SCI |
|---|---|
| Sequence cyclic shift | 0 |

FIG. 8 illustrates a cast type for V2X or SL communication in a wireless communication system to which the present disclosure may be applied. The embodiment of FIG. 8 may be combined with various embodiments of the present disclosure.

Referring to FIG. 8, FIG. 8(a) represents a broadcast type SL communication, FIG. 8(b) represents a unicast type SL communication, and FIG. 8(c) represents a group-cast type SL communication. In the case of a unicast type SL communication, a UE can perform one-to-one communication with another UE. In the case of a group-cast type SL communication, a UE may perform SL communication with one or more UEs within the group to which it belongs. In various embodiments of the present disclosure, SL group-cast communication may be referred to as SL multicast communication, SL one-to-many communication, etc.

Hereinafter, the HARQ (Hybrid Automatic Repeat Request) procedure is described.

For example, SL HARQ feedback may be enabled for unicast. In this case, in non-Code Block Group (CBG) operation, if a receiving UE decodes a PSCCH targeting the receiving UE and the receiving UE successfully decodes a transport block associated with the PSCCH, the receiving UE may generate an ACK. Then, the receiving UE may transmit the HARQ-ACK to the transmitting UE. On the other hand, if the receiving UE fails to successfully decode a transport block associated with the PSCCH after the receiving UE decodes the PSCCH targeting the receiving UE, the receiving UE may generate a NACK. Then, the receiving UE may transmit the NACK to the transmitting UE.

Also, for example, SL HARQ feedback may be enabled for group-cast. For example, in non-CBG operation, two HARQ feedback options may be supported for group-cast.

(1) group-cast option 1: If the receiving UE fails to decode a transport associated with the PSCCH after the receiving UE decodes the PSCCH targeting the receiving UE, the receiving UE may transmit a NACK to the transmitting UE via the PSFCH. On the other hand, if the receiving UE decodes the PSCCH targeting the receiving UE and the receiving UE successfully decodes the transport block associated with the PSCCH, the receiving UE may not transmit an ACK to the transmitting UE.

(2) Group-cast option 2: If the receiving UE fails to decode a transport block associated with the PSCCH after the receiving UE decodes the PSCCH targeting the receiving UE, the receiving UE may transmit a NACK to the transmitting UE via the PSFCH. Then, if the receiving UE decodes the PSCCH targeting the receiving UE and the receiving UE successfully decodes the transport block associated with the PSCCH, the receiving UE may transmit an ACK to the transmitting UE via the PSFCH.

For example, if group-cast option 1 is used for SL HARQ feedback, all UEs performing group-cast communication may share PSFCH resources. For example, UEs belonging to the same group may transmit HARQ feedback using the same PSFCH resources.

For example, if group-cast option 2 is used for SL HARQ feedback, each UE performing group-cast communication may use different PSFCH resources for HARQ feedback transmission. For example, UEs belonging to the same group may transmit HARQ feedback using different PSFCH resources.

In the present disclosure, ACK may be referred to as HARQ-ACK, ACK information, or positive-ACK information, and NACK may be referred to as HARQ-NACK, NACK information, or negative-ACK information.

Sidelink grants may be semi-persistently configured by RRC or received dynamically on the PDCCH, which is autonomously selected by the MAC entity. The MAC entity may have a sidelink grant on the active SL BWP to determine the set of PSCCH periods in which SCI transmissions occur and the set of PSSCH periods in which SL-SCH transmissions associated with SCI occur.

When the MAC entity is configured to sidelink resource allocation mode 1, the MAC entity may perform actions based on each PDCCH occasion and each grant received for that PDCCH occasion.

Operations in unlicensed band/spectrum or shared spectrum

In next wireless system, UE may perform a sidelink transmission and/or reception in unlicensed band/spectrum or shared spectrum.

Meanwhile, for operations in unlicensed band, according to regulations or requirements for each band, a channel sensing operation (e.g., energy detection/measurement) for a channel to be used may be performed before performing transmission of UE.

Accordingly, UE may perform a transmission in the unlicensed band only if a channel or an RB set to be used is determined as IDLE (e.g., measured energy is not greater than or is less than a specific threshold) according to the result of the channel sensing. Alternatively, if a channel or an RB set to be used is determined as BUSY (e.g., measured energy is not less than or is greater than a specific threshold), a UE may cancel all or a part of a transmission in the unlicensed band. Here, according to the regulations or requirements for a transmission in the unlicensed band, a channel or an RB set may be determined as IDLE or BUSY based on whether each of a time period of signal/channel transmitted by the UE and/or a size of a frequency occupancy region and/or power spectral density (PSD) is equal to or greater than a certain level.

Meanwhile, in the operation in the unlicensed band, after transmission for a specific time period of the UE, for a certain period of time, the channel sensing operation may be omitted or simplified (with a relatively small channel sensing period). On the other hand, after a certain period of time has passed after the transmission, whether to perform a transmission may be determined after performing a normal channel sensing operation. In addition, in the unlicensed band, for simplifying channel sensing, it may be notified through channel occupancy time (COT) interval information that a channel obtained through initial normal channel sensing will be occupied for a certain period of time, and the length of the COT interval may be set to a different maximum value depending on the priority value of the service or data packet.

A base station may share the COT interval obtained through its channel sensing in the form of DCI transmission, and the UE may perform a specific (indicated) channel sensing type and/or cyclic prefix (CP) extension within the COT interval according to the DCI information received from the base station. In addition, the UE may share the COT interval obtained through its channel sensing with the base station that is the receiving target of the UL transmission of the UE, and the related information may be provided through UL through configured grant-uplink control information (CG-UCI). In the above situation, the base station may perform simplified channel sensing within the COT interval shared from the UE.

Sidlelink transmission based on channe occupancy time (COT) of base station

NR Unlicensed Spectrum (NR-U) refers to a mode that provides the technology necessary for cellular operators to integrate unlicensed spectrum into their wireless communication systems. NR-U may enable both uplink and downlink operations in unlicensed spectrum.

In NR-U, channel access for uplink and downlink relies on LBT functionality. The UE and/or base station may first sense the communication channel to determine if there is no communication before transmission. If the communication channel is a wideband unlicensed carrier, the channel sensing procedure of NR-U may rely on sensing energy levels in multiple subbands of the communication channel. The base station may configure LBT parameters (e.g., type/duration, clear channel assessment parameters, etc.) for the UE.

In NR-U, a UE may determine the time and location of transmission and reception based on the indications of the COT (Channel Occupancy Time) structure. The COT consists of multiple slots, and each slot may consist of downlink resources, uplink resources, or flexible resources.

In an NR-U system, both contiguous and interlaced uplink resource allocations may be supported while complying with the regulations. In interlace uplink resource allocation, the basic unit of resource allocation for an NR unlicensed channel may be an interlace. For example, a single interlace may consist of ten equally spaced resource blocks within a 20 MHz frequency bandwidth for a 15 kHz subcarrier spacing.

For NR-U, the physical layer may perform the LBT procedure. The LBT procedure means a procedure in which transmission is not performed when the channel is determined to be occupied. If the channel is identified as occupied according to the LBT procedure, transmission may not be performed by the physical layer. If the physical layer performs the LBT procedure before transmission and transmission is not performed, the physical layer may transmit an LBT failure indication to the MAC entity.

Unless otherwise specified, the operations specified in the present disclosure may be performed regardless of whether an LBT failure indication is received from the physical layer when an LBT procedure is performed for transmission. If the physical layer does not perform LBT, an LBT failure indication may not be received from the physical layer.

In the present disclosure, when certain information is defined between a terminal and a base station, it may mean that a terminal and a base station know corresponding information without separate signaling between a terminal and a base station; when it is configured between a terminal and a base station, it may mean that corresponding information is transmitted/received through higher layer (e.g., RRC) signaling between a terminal and a base station; and when it is indicated between a terminal and a base station, it may mean that corresponding information is transmitted/received through lower layer (e.g., L1 (e.g., DCI/UCI), L2 (e.g., MAC-CE)) signaling.

In the examples of the present disclosure described below, a sidelink transmitting terminal operating in SL mode 1 (or sidelink resource allocation mode 1) may determine a SL transmission resource based on resource allocation of a base station. In SL mode 1, resource allocation of a base station may be provided in a dynamic grant or configured grant manner. A sidelink transmitting terminal operating in SL mode 2 (or sidelink resource allocation mode 2) may autonomously select a SL transmission resource within a configured resource pool. While SL mode 1 requires a terminal to be in a RRC connected mode, SL mode 2 may also be applied to a terminal in a RRC connected mode, a RRC inactive mode and a RRC idle mode.

In the examples of the present disclosure described below, a type-1 channel access procedure corresponds to a procedure for performing sensing for a channel occupancy state for a period randomly selected before transmission in a shared spectrum (or an unlicensed band). A type-2 channel access procedure corresponds to a procedure for performing sensing for a channel occupancy state for a fixed period before transmission in a shared spectrum (or an unlicensed band). When a channel is idle for a corresponding sensing period, a terminal may attempt channel access. For example, type-2A, 2B and 2C channel access procedures may be configured to have a sensing performance period length of 25 microseconds(us), 16us and 0us (i.e., no sensing is performed), respectively.

In the examples of the present disclosure described below, a channel occupancy time (COT) refers to the total time during which after a base station (e.g., eNB, gNB, etc.)/a terminal(UE) performs a corresponding channel access procedure in a shared spectrum (or an unlicensed band), a base station/a terminal and a base station/a terminal sharing channel occupancy perform transmission(s) on a channel.

In the examples of the present disclosure described below, Channel Access Priority Classes (CAPC) correspond to a priority for channel access in a shared spectrum (or an unlicensed band). According to a priority class of CAPC, the minimum value/the maximum value of a contention window, the maximum COT, etc. may be defined/configured in advance.

In the examples of the present disclosure described below, a terminal having a MAC PDU to be transmitted in SL mode 2 may determine transmission (re-)selection check within a resource pool, transmission resource (re-)selection, the selection of a time-frequency resource, the number of HARQ retransmissions, etc. and a PSCCH/PSSCH duration based on selected sidelink grant.

In sidelink communication in an existing unlicensed band (or shared spectrum), when TB transmission is not completed during the COT secured by a terminal, a terminal may secure a new COT through LBT (or a channel access procedure) and perform retransmission for the TB. Here, a problem may occur in which retransmission may not be performed or retransmission is delayed due to a LBT failure (or a channel access failure) while a terminal attempts to secure a new COT.

For example, after a terminal configured/operating in SL mode 2 (e.g., a terminal receives a resource pool configuration from a base station and selects a sidelink transmission resource within a resource pool) transmits a TB through a selected resource, the retransmission of a corresponding TB may be required (e.g., NACK reception through a PSFCH from a sidelink receiving terminal, etc.).

In this case, in order to prevent a problem such as a retransmission delay, etc. caused by a sidelink transmitting terminal newly performing a channel access procedure, the present disclosure describes a new method in which a terminal that wants to perform retransmission on a sidelink transmits NACK through a PUCCH to a base station and performs SL retransmission on a resource provided from a base station through DCI (e.g., a resource within the COT duration of a base station). As such, a new operation may be supported in which rapid retransmission is performed as a base station allows some sidelink transmission through COT sharing for a terminal operating in SL mode 2.

For example, in a SL transmitting terminal operating in SL mode 2, transmission resource (re-)selection may be triggered and type-1 channel access may be performed accordingly to perform SL transmission on a (re-)selected resource. After that, a SL transmitting terminal may report to a network (or a base station) an indication/a request that the retransmission of a previous TB is required, or an indication/a request that additional SL transmission is required when receiving SL NACK feedback from a SL receiving terminal. It may correspond to requesting a dynamic grant for additional transmission for a network (or a base station). Accordingly, a base station may secure a COT and provide SL resource allocation information through DCI (e.g., DCI format 3_0). It may correspond to a case in which a SL transmitting terminal configured to be in SL mode 2 temporarily or dynamically switches to SL mode 1 or a case in which a terminal configured to be in SL mode 2 may exceptionally receive a dynamic SL grant. Accordingly, a SL transmitting terminal may perform type-2 channel access on a resource allocated by a base station (i.e., within a COT duration shared by a base station) and perform SL transmission (e.g., the retransmission of a previous TB or the initial transmission of a new TB) based on a SL grant from a base station. If SL NACK feedback is received from a SL receiving terminal for SL transmission, a terminal may operate in SL mode 2 (based on an original configuration).

As described above, sharing a COT duration secured by a base station with a terminal may also be performed in an existing shared spectrum (or unlicensed band) operation, but the present disclosure may support a new operation in which the COT sharing of a base station is applied in response to an indication or a request for a terminal to perform sidelink retransmission (or additional transmission).

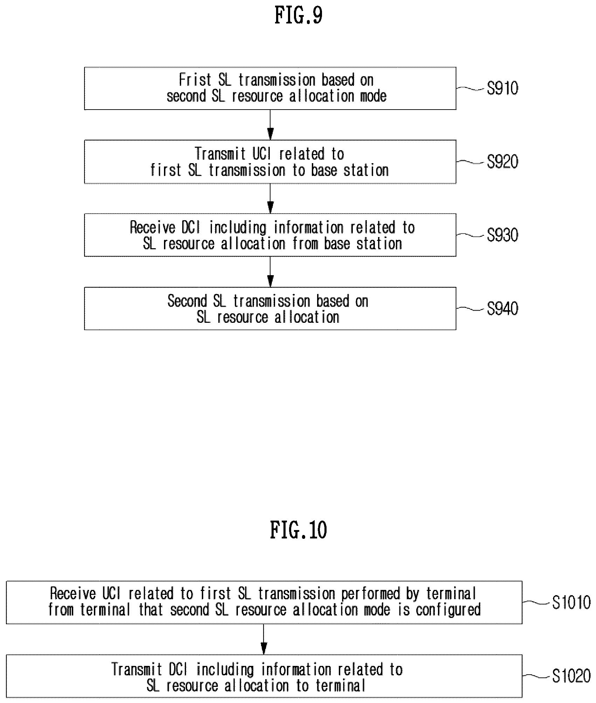

FIG. 9 is a diagram for describing an exemplary method of a terminal performing sidelink transmission based on a channel occupancy time of a base station according to an embodiment of the present disclosure.

In S910, a terminal may perform the first SL transmission based on the second SL resource allocation mode.

The second SL resource allocation mode may correspond to an operation mode (i.e., SL mode 2) that performs SL transmission to another terminal on a resource selected by a terminal based on a SL resource pool. In this regard, a SL resource pool-related configuration may be provided in advance from a base station to a terminal (i.e., a SL transmitting terminal).

In S920, a terminal may transmit UCI related to the first SL transmission to a base station.

UCI related to the first SL transmission may be transmitted in the second SL resource allocation mode.

UCI related to the first SL transmission may be based on SL NACK for the first SL transmission. For example, for the first SL transmission from a SL transmitting terminal to a SL receiving terminal, SL NACK from a SL receiving terminal may be provided to a SL transmitting terminal from a SL receiving terminal through a PSFCH. For example, UCI related to the first SL transmission may include information requesting a base station for a resource for retransmission of a TB associated with the first SL transmission.

Additionally or alternatively, UCI related to the first SL transmission may include a scheduling request for new TB transmission that is different from a TB associated with the first SL transmission.

The first SL transmission may be performed based on a first type channel access procedure that includes sensing for a random length of time.

In S930, a terminal may receive DCI including information related to SL resource allocation from a base station.

DCI may include information related to a dynamic grant (e.g., DCI format 3_0, etc.) in the first SL resource allocation mode.

Information related to SL resource allocation may indicate a resource within the COT duration of a base station.

In S940, a terminal may perform the second SL transmission based on SL resource allocation.

A TB associated with the second SL transmission may be the same as a TB associated with the first SL transmission in S920, and in this case, the second SL transmission may correspond to retransmission. Alternatively, a TB associated with the second SL transmission may be different from a TB associated with the first SL transmission in S920, and in this case, the second SL transmission may correspond to initial transmission or additional transmission.

The second SL transmission may be performed based on a second type channel access procedure including sensing for a fixed length of time (including 0).

At least one of DCI reception in S930 or the second SL transmission in S940 may be performed based on the first SL resource allocation mode. The first SL resource allocation mode may correspond to an operation mode in which a terminal determines a SL transmission resource according to the scheduling of a base station, instead of autonomously selecting a SL transmission resource within a resource pool.

In other words, a terminal may operate in the second SL resource allocation mode and then temporarily or dynamically switch to the first SL resource allocation mode at a step of DCI reception or the second SL transmission. Alternatively, a terminal may be allowed to operate based on the first SL resource allocation mode for a predetermined period of time or based on a predetermined event, even while a configuration for the second SL resource allocation mode is valid, instead of changing/switching a SL resource allocation mode.

FIG. 10 is a diagram for describing an exemplary method of a base station supporting a terminal to perform sidelink transmission based on a channel occupancy time of a base station according to an embodiment of the present disclosure.

In S1010, a base station may receive UCI related to the first SL transmission performed by a corresponding terminal from a terminal that the second SL resource allocation mode is configured.

In S 1020, a base station may transmit DCI including information related to SL resource allocation to a terminal. A terminal may perform the second SL transmission based on SL resource allocation and information related to this SL resource allocation may indicate a resource within a COT duration of a base station.

In an example of FIG. 10, a specific description of the first SL transmission and the second SL transmission, UCI and DCI is the same as a description of an example of FIG. 9, so an overlapping description is omitted.

Following an exemplary method of FIGS. 9 and 10, when SL NACK is indicated for the second SL transmission of a terminal, SL NACK (or information based thereon) for the second SL transmission may be reported to a base station through a PUCCH resource associated with the second SL resource allocation mode. Accordingly, a terminal temporarily operating based on the first SL resource allocation mode in DCI reception or the second SL transmission may operate based on the second SL resource allocation mode (according to an originally configured mode) after the second SL transmission or after transmitting SL NACK (or information based thereon) for the second SL transmission to a base station.

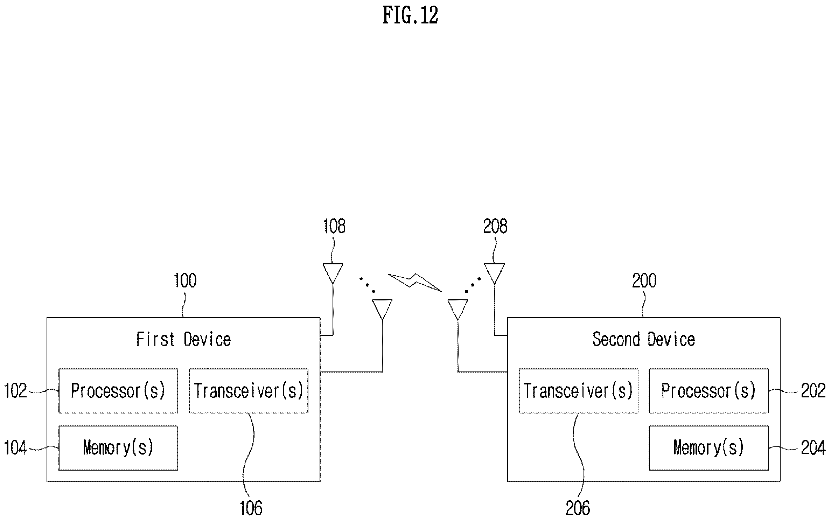

An operation performed by a terminal in an example of FIGS. 9 and 10 may be performed by a first device (100) of FIG. 12. When executed by at least one processor (102), at least one memory (104) may store an instruction that causes a first device (100) to perform an operation of a terminal in an example of FIGS. 9 and 10.

An operation performed by a base station in an example of FIGS. 9 and 10 may be performed by a second device (200) of FIG. 12. When executed by at least one processor (202), at least one memory (204) may store an instruction that causes a second device (200) to perform an operation of a base station in an example of FIGS. 9 and 10.

As such, according to a sidelink communication operation in an unlicensed band in the existing wireless communication system, when SL mode 2 in which a terminal autonomously selects a resource within a pre-determined/configured resource pool is configured for a terminal, a base station has no way to dynamically or temporarily provide a SL grant to a terminal even if it acquires a COT, so a terminal may not use a COT of a base station for SL transmission/retransmission. In order to solve this problem, the present disclosure proposes a new method in which a base station shares a COT or provides a SL grant to a terminal (in particular, a terminal configured as SL mode 2) and describes specific examples of the present disclosure below.

In a sidelink transmission/retransmission method based on a COT of a base station according to the present disclosure, it is assumed that SL resource allocation mode 2 (i.e., an autonomous SL resource selection mode of a terminal based on a configured resource pool) is configured for a SL transmitting terminal. In other words, configuration information for a resource pool may be provided to a terminal. Accordingly, a terminal may autonomously select/reselect a resource within a resource pool for N (N is an integer greater than or equal to 1) transmissions of TB(s).

When N transmissions of TB(s) are completed and additional transmission/retransmission is required, a terminal may request a grant for dynamic transmission from a network/a base station. For example, such a request may be transmitted on a PUCCH or a PUSCH, or may be transmitted as UCI.

A terminal that receives a dynamic grant from a network/a base station may perform retransmission of a previous TB or perform initial transmission of another TB by using a corresponding dynamic grant. Transmission performed by a terminal based on a dynamic grant may be sidelink transmission or uplink transmission. A retransmission grant may be received through DCI/a PDCCH. A terminal may perform a type-2 channel access procedure within a COT of a base station and perform retransmission or initial transmission by using a dynamic grant.

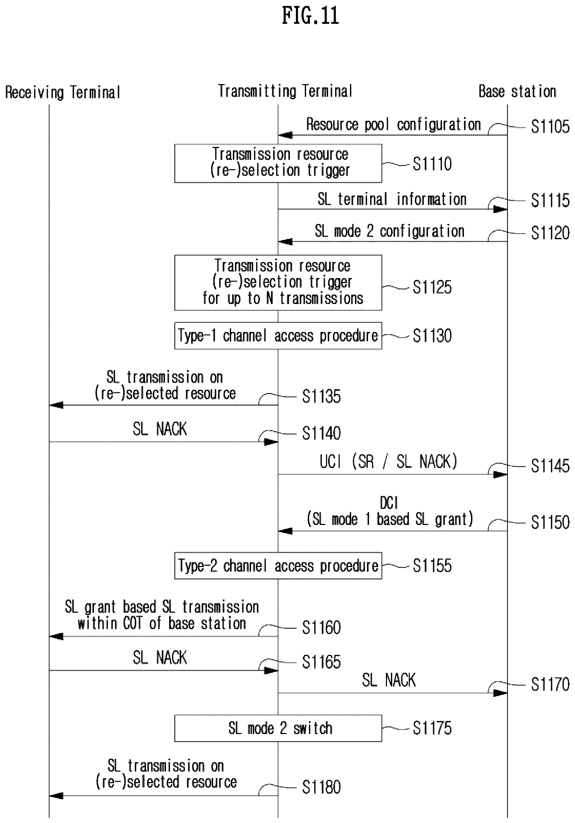

FIG. 11 is a diagram for describing a method performed by a SL transmitting terminal, a SL receiving terminal and a base station according to an embodiment of the present disclosure.

An example of FIG. 11 shows a method in which a base station allocates a SL resource based on SL mode 1 within a COT of a base station for a terminal that reserves a SL resource based on SL mode 2.

In S1105, a base station may provide system information including a resource pool configuration, etc. to a transmitting terminal (i.e., a SL transmitting terminal). In S1110, a transmitting terminal may trigger transmission resource (re-)selection without HARQ feedback. In S1115, a transmitting terminal may report SL terminal information (e.g., a resource pool configuration, information on a selected resource, etc.) to a base station. In S1120, a base station may provide a transmitting terminal with a configuration for SL mode 2 related to a resource pool. In S1125, a transmitting terminal may trigger transmission resource (re-)selection for up to N transmissions with HARQ feedback.

In order to perform SL mode 2-based SL transmission in an unlicensed band (or a shared spectrum) in S1130, a terminal may perform a type-1 (e.g., including sensing for a random time length) channel access procedure. When a channel is determined to be available, a transmitting terminal may transmit TB1 to a receiving terminal based on SL mode 2 in S1135. In S1140, a transmitting terminal may receive SL HARQ-ACK from a receiving terminal through a PSFCH. SL HARQ-ACK may be SL ACK or SL NACK showing whether TB1 is successfully decoded at a receiving terminal.

When information received in S1140 is SL NACK, a transmitting terminal may transmit UCI requesting a SL resource to a base station in S1145. For example, UCI may include a SL resource request transmitted through a SR PUCCH resource.

For example, a base station may pre-allocate/configure a periodic SR PUCCH resource and/or a periodic ACK/NACK PUCCH resource to a terminal so that a terminal in SL mode 2 may transmit a PUCCH.

As a SR PUCCH resource, a PUCCH format 0 or PUCCH format 1 resource having a predetermined period may be allocated to a terminal. For example, a base station may configure a predetermined period to be the same as, or a multiple of, or a divisor of a resource allocation interval based on SL mode 2.

Here, when a terminal does not have a COT and has data/a TB to transmit, a terminal may trigger a SR and transmit a SR to a base station. Alternatively, when a terminal has a COT or does not have data/a TB to transmit, a terminal may not trigger a SR (or needs not to trigger a SR) and accordingly, may not transmit a SR.

A specific SR configuration or a specific PUCCH resource associated with (or for) a SL resource request may be defined or configured in advance. For example, similar to a PUCCH resource configuration associated with a SPS, a PUCCH format 0 or PUCCH format 1 resource with a predetermined period may be allocated to a terminal. For example, a base station may configure a predetermined period to be the same as, or a multiple of, or a divisor of a resource allocation interval based on SL mode 2.

Additionally or alternatively, when a terminal does not have a COT and has data/a TB to transmit, a terminal may report information expressing NACK (or SL NACK) to a base station. SL NACK-based information reported by a terminal may be considered by a base station as a request of a resource for SL transmission/retransmission.

Alternatively, when a terminal has a COT or does not have data/a TB to transmit, a terminal may not report information expressing NACK (or SL NACK) to a base station or a terminal may report information expressing ACK (or SL ACK) to a base station.

UCI such as NACK or a SR based on SL NACK as described above may additionally include information about a HARQ process ID, NDI, etc. for TB1. Based on this, a base station may determine a resource which will be allocated for SL transmission/retransmission.

Additionally or alternatively, UCI such as NACK or a SR based on SL NACK as described above may include terminal COT sharing information that may be used by a base station (i.e., information that allows a base station to attempt channel access within a COT owned by a terminal).

In S1150, a base station may indicate a SL grant based on SL mode 1 to a transmitting terminal. For example, a SL grant based on SL mode 1 may include information corresponding to DCI format 3_0. Accordingly, a transmitting terminal originally configured as SL mode 2 may temporarily switch to SL mode 1 and perform SL transmission/retransmission within a COT of a base station. Alternatively, SL transmission based on SL mode 1 may be temporarily allowed for a transmitting terminal configured as SL mode 2. Accordingly, immediately after a COT of a base station or immediately after SL grant-based SL transmission/retransmission, a terminal may switch back to the original SL mode 2, or SL transmission based on SL mode 1 temporarily allowed may not be allowed again.

A terminal that receives a SL grant may perform a type-2 (e.g., including sensing for a fixed time length including 0) channel access procedure in S1155. Additionally or alternatively, type-1 channel access or type-2 channel access may be indicated by DCI including a SL grant. In this case, a transmitting terminal may perform type-1 or type-2 channel access according to an indication of DCI.

When a channel is determined to be available, a transmitting terminal may perform SL transmission/retransmission based on a SL grant within a COT of a base station in S1160. For example, a transmitting terminal may retransmit TB1 based on a SL grant or perform initial transmission of TB2 that is different from TB1.

Additionally or alternatively, CAPC may be indicated through DCI in connection with a type-1 channel access procedure. In this case, a terminal may perform a channel access procedure based on the indicated CAPC (e.g., randomly determine a contention window size within a range allowed by the CAPC).

Additionally or alternatively, when UCI received by a base station in S1145 includes a HARQ process ID and/or NDI associated with the SL transmission of TB1 of a terminal, a HARQ process ID and/or NDI value within DCI may be set based on this.

If a HARQ process ID indicated by DCI is the same as a HARQ process ID reported through UCI: When NDI is toggled, the initial transmission of TB2 may be performed within a COT of a base station based on a SL grant; or when NDI is not toggled, the retransmission of TB1 may be performed within a COT of a base station based on a SL grant.

If a HARQ process ID indicated by DCI is different from a HARQ process ID reported through UCI: The initial transmission of TB2 may be performed within a COT of a base station based on a SL grant (regardless of whether NDI is toggled or regardless of a value of NDI).

After a transmitting terminal performs SL grant-based (or SL mode 1-based) SL transmission in S1160, a transmitting terminal may receive SL NACK from a receiving terminal through a PSFCH. In this case, a transmitting terminal may report information based on SL NACK (or expressing SL NACK) to a base station in S1170.

In S1175, a transmitting terminal may switch back to the original SL mode 2 immediately after a COT of a base station is expired or immediately after SL grant-based transmission/retransmission is performed or immediately after SL NACK for SL grant-based transmission/retransmission is reported to a base station. Accordingly, a transmitting terminal may autonomously (re-)select a resource within a resource pool based on SL mode 2 to perform SL transmission in S1180.

For a terminal configured as SL resource allocation mode 2, the above-described examples mainly describe an example in which DCI including a dynamic grant provided in response to a request from a corresponding terminal (e.g., UCI based on SL NACK for the first SL transmission) includes SL resource allocation, but DCI may include UL resource allocation instead of SL resource allocation. In other words, after the first SL transmission based on SL resource allocation mode 2 (and after transmitting UCI based on SL NACK for the first SL transmission to a base station), a terminal may perform uplink transmission to a base station within a COT of a base station based on a UL grant or UL resource allocation from a base station.

According to the present disclosure, a terminal configured as SL resource allocation mode 2 may perform SL transmission within a COT of a base station. In particular, when a terminal autonomously decides to perform new transmission or when a terminal autonomously decides to perform additional retransmission(s) exceeding N times by using resource(s) allocated by a network after retransmitting a TB up to N times on a resource pool, SL transmission based on a COT of a base station may be performed according to the present disclosure.

In an example of FIG. 11, an operation performed in a transmitting terminal or a receiving terminal may be performed by a first device (100) of FIG. 12. When executed by at least one processor (102), at least one memory (104) may store an instruction that causes a first device (100) to perform an operation of a transmitting terminal or a receiving terminal in an example of FIG. 11.

In an example of FIG. 11, an operation performed in a base station may be performed by a second device (200) of FIG. 12. When executed by at least one processor (202), at least one memory (204) may store an instruction that causes a second device (200) to perform an operation of a base station in an example of FIG. 11.

General Device to which the Present Disclosure may be applied

FIG. 11 is a diagram which illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods included in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a terminal in a wireless communication system, the method comprising:

   performing a first SL transmission on a resource selected by the terminal based on a sidelink (SL) resource pool;
   transmitting, to a base station, uplink control information (UCI) related to the first SL transmission;
   receiving, from the base station, downlink control information (DCI) including information related to a SL resource allocation; and
   performing a second SL transmission based on the SL resource allocation,
   wherein the information related to the SL resource allocation indicates a resource within a channel occupancy time (COT) duration of the base station.

2. The method of Claim 1, wherein:
   a second SL resource allocation mode based on the SL resource pool is configured for the terminal.

3. The method of Claim 2, wherein:
   the first SL transmission and the UCI transmission are performed based on the second SL resource allocation mode.

4. The method of Claim 2, wherein:
   at least one of the DCI reception or the second SL transmission is performed based on a first SL resource allocation mode.

5. The method of Claim 1, wherein:
   the UCI is based on a SL non-acknowledgement (NACK) for the first SL transmission.

6. The method of Claim 5, wherein:
   the UCI includes information requesting a resource for a retransmission of a transport block (TB) associated with the first SL transmission.

7. The method of Claim 6, wherein:
   the TB associated with the first SL transmission is equal to a TB associated with the second SL transmission.

8. The method of Claim 1, wherein:
   the UCI includes a scheduling request (SR) for a new TB transmission different from a TB associated with the first SL transmission.

9. The method of Claim 1, wherein:
   the DCI includes information related to a dynamic grant in a first SL resource allocation mode.

10. The method of Claim 1, wherein:

    the first SL transmission is performed based on a first type channel access procedure including a sensing during a random length of time,
    the second SL transmission is performed based on a second type channel access procedure including a sensing during a fixed length of time.

11. The method of Claim 1, wherein:
    the method further includes based on a SL NACK for the second SL transmission being received, reporting, to the base station, the SL NACK through a physical uplink control channel (PUCCH) resource associated with a second SL resource allocation mode.

12. The method of Claim 11, wherein:
    after the second SL transmission, or after the SL NACK transmission, the terminal operates based on the second SL resource allocation mode.

13. A terminal in a wireless communication system, the terminal comprising:

    at least one transceiver; and

at least one processor connected to the at least one transceiver,
wherein the at least one processor is configured to:

perform, through the at least one transceiver, a first SL transmission on a resource selected by the terminal based on a sidelink (SL) resource pool;
transmit, through the at least one transceiver, to a base station, uplink control information (UCI) related to the first SL transmission;
receive, through the at least one transceiver, from the base station, downlink control information (DCI) including information related to a SL resource allocation; and
perform, through the at least one transceiver, a second SL transmission based on the SL resource allocation,

wherein the information related to the SL resource allocation indicates a resource within a channel occupancy time (COT) duration of the base station.

14. A method performed by a base station in a wireless communication system, the method comprising:

receiving, from a terminal, uplink control information (UCI) related to a first SL transmission transmitted by the terminal on a resource selected by the terminal based on a sidelink (SL) resource pool; and
transmitting, to the terminal, downlink control information (DCI) including information related to a SL resource allocation,
wherein information related to the SL resource allocation for a second SL transmission performed by the terminal indicates a resource within a channel occupancy time (COT) duration of the base station.

15. A base station in a wireless communication system, the base station comprising:

at least one transceiver; and
at least one processor connected to the at least one transceiver,
wherein the at least one processor is configured to:

receive, through the at least one transceiver, from a terminal, uplink control information (UCI) related to a first SL transmission transmitted by the terminal on a resource selected by the terminal based on a sidelink (SL) resource pool; and
transmit, through the at least one transceiver, to the terminal, downlink control information (DCI) including information related to a SL resource allocation,

wherein information related to the SL resource allocation for a second SL transmission performed by the terminal indicates a resource within a channel occupancy time (COT) duration of the base station.

16. A processing unit configured to control a terminal in a wireless communication system, the processing unit comprising:

at least one processor; and
at least one computer memory which is operably connected to the at least one processor and stores instructions for performing a method according to any one of Claim 1 to Claim 12 based on being executed by the at least one processor.

17. At least one non-transitory computer readable medium storing at least one instruction, wherein:
the at least one instruction controls a device to perform a method according to any one of Claim 1 to Claim 12 in a wireless communication system by being executed by at least one processor.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends
on subcarrier
spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k,\bar{l})$
- In a resource block, $(k,l)$

$k = 0$

$l = 0$

$l = 14 \cdot 2^{\mu} - 1$

# FIG.4

# FIG.5

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

EP 4 518 533 A1

# FIG.7

(a)

(b)

# FIG.8

(a)

(b)

(c)

● : Transmitting UE

⊘ : Receiving UE

# FIG.9

| | |
|---|---|
| Frist SL transmission based on second SL resource allocation mode | ~S910 |
| Transmit UCI related to first SL transmission to base station | ~S920 |
| Receive DCI including information related to SL resource allocation from base station | ~S930 |
| Second SL transmission based on SL resource allocation | ~S940 |

# FIG.10

| | |
|---|---|
| Receive UCI related to first SL transmission performed by terminal from terminal that second SL resource allocation mode is configured | ~S1010 |
| Transmit DCI including information related to SL resource allocation to terminal | ~S1020 |

# FIG.11

FIG.12

EP 4 518 533 A1

**EP 4 518 533 A1**

| INTERNATIONAL SEARCH REPORT | International application No. |
|---|---|
| | **PCT/KR2023/005728** |

### A. CLASSIFICATION OF SUBJECT MATTER

**H04W 72/25**(2023.01)i; **H04W 72/21**(2023.01)i; **H04W 72/232**(2023.01)i; **H04W 72/04**(2009.01)i; **H04L 1/18**(2006.01)i; **H04W 92/18**(2009.01)i

According to International Patent Classification (IPC) or to both national classification and IPC

### B. FIELDS SEARCHED

Minimum documentation searched (classification system followed by classification symbols)

H04W 72/25(2023.01); H04W 74/00(2009.01); H04W 74/08(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 자원 풀(resource pool), 상향링크 제어 정보(uplink control information), 하향링크 제어 정보(downlink control information), 자원 할당(resource allocation), 채널 점유 시간(channel occupancy time)

### C. DOCUMENTS CONSIDERED TO BE RELEVANT

| Category* | Citation of document, with indication, where appropriate, of the relevant passages | Relevant to claim No. |
|---|---|---|
| Y | US 2022-0078845 A1 (SONY GROUP CORPORATION) 10 March 2022 (2022-03-10)<br>See paragraphs [0064]-[0071] and [0092]-[0093]; and figures 2-3. | 1-17 |
| Y | US 2021-0092783 A1 (QUALCOMM INCORPORATED) 25 March 2021 (2021-03-25)<br>See paragraphs [0054] and [0128]. | 1-17 |
| A | WO 2021-062602 A1 (LENOVO (BEIJING) LIMITED) 08 April 2021 (2021-04-08)<br>See paragraphs [0021]-[0098]; and figures 1-10. | 1-17 |
| A | WO 2021-195649 A2 (FUTUREWEI TECHNOLOGIES, INC.) 30 September 2021 (2021-09-30)<br>See page 11, line 6 - page 46, line 5; and figures 1-26. | 1-17 |
| A | VIVO. Maintenance on NR sidelink mode-1 resource allocation mechanism. R1-2105462, 3GPP TSG RAN WG1 #105-e. 11 May 2021.<br>See sections 1-3.4. | 1-17 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **27 July 2023** | **28 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/005728**

| Patent document cited in search report | | | Publication date (day/month/year) | Patent family member(s) | | | Publication date (day/month/year) |
|---|---|---|---|---|---|---|---|
| US | 2022-0078845 | A1 | 10 March 2022 | CN | 111565475 | A | 21 August 2020 |
| | | | | CN | 113396633 | A | 14 September 2021 |
| | | | | EP | 3927102 | A1 | 22 December 2021 |
| | | | | WO | 2020-164439 | A1 | 20 August 2020 |
| US | 2021-0092783 | A1 | 25 March 2021 | CN | 114424640 | A | 29 April 2022 |
| | | | | EP | 4035468 | A1 | 03 August 2022 |
| | | | | US | 11672034 | B2 | 06 June 2023 |
| | | | | WO | 2021-061880 | A1 | 01 April 2021 |
| WO | 2021-062602 | A1 | 08 April 2021 | CN | 114375606 | A | 19 April 2022 |
| | | | | EP | 4039033 | A1 | 10 August 2022 |
| | | | | EP | 4039033 | A4 | 10 May 2023 |
| | | | | US | 2022-0304059 | A1 | 22 September 2022 |
| WO | 2021-195649 | A2 | 30 September 2021 | CN | 116058060 | A | 02 May 2023 |
| | | | | EP | 4186316 | A2 | 31 May 2023 |
| | | | | US | 2023-0180293 | A1 | 08 June 2023 |
| | | | | WO | 2021-195649 | A3 | 06 January 2022 |

Form PCT/ISA/210 (patent family annex) (July 2022)